(19) Europäisches Patentamt
European Patent Office
Office européen des brevets

(11) **EP 1 804 542 A1**

(12) **EUROPEAN PATENT APPLICATION**

(43) Date of publication:
**04.07.2007 Bulletin 2007/27**

(51) Int Cl.:
**H04Q 7/38** *(2006.01)*

(21) Application number: **05425916.3**

(22) Date of filing: **27.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Siemens S.p.A.**
**20126 Milano (IT)**

(72) Inventors:
• **De Benedittis, Rossella**
**20137 Milano (IT)**
• **Prete, Annunziata**
**84014 Nocera Inferiore (IT)**
• **Dipietro, Sonia**
**20092 Cinisello Balsamo (IT)**

(54) **Modeling the downlink system load**

(57) In wireless telecommunication systems, known methods for estimating the downlink system load are very complex since the receiving point for the cell-transmitted signal varies with the geographical points of the user within the serving cell.

The proposed invention provides a method for modeling the downlink system load in a cellular telecommunication system which comprises the steps of: a) selecting a virtual point in which all users are virtually moved; b) calculating, for each user, a virtual target level of received signal quality as if all users were virtually located at the virtual point so that the power budget of the cell and each of the actual target levels of received signal quality are unchanged; and c) modeling said downlink system load as if all said users were virtually located at said virtual point.

**FIG 2**

EP 1 804 542 A1

**Description**

Field of the Invention

The present invention relates to a method according the preamble of claim 1 and to a method according the preamble of claim 3.

In a variety of wireless telecommunication systems of new generation, mobile users within a cell share a common pool of radio resources. Such shared radio resources may include time, power, frequency and codes.

An example of such new generation wireless systems is the 3rd Generation (3G) Universal Mobile Telecommunication Systems (UMTS), like the Frequency Division Duplex (FDD) mode based on Wideband Code Division Multiple Access (WCDMA). Besides, also 4G wireless systems, as WiMax, and the evolution of 2G standards (e.g. GSM) apply the concept of shared resources.

For example, in WCDMA technologies, the system environment has the characteristic of being interference-limited since power and spectrum resources are shared among the users and among the cells of the system. Such characteristic implies that the traffic load handled by a cell affects also the traffic loads handled by the neighbour cells and, thus, it has also an impact on the traffic load served by the whole system.

Background Art

In order to properly manage the shared resources, a variety of Radio Resources Management (RRM) algorithms are provided.

An examples of basic RRM functions is admission control that performs the check if a new request for radio resources from a user accessing a cell can be admitted without degrading the quality of the ongoing calls/users.

Thus, admission control plays a primary role in optimising the utilization of the cell-shared resources and in maintaining the system load within a delimited range in order to avoid unstable conditions in the network.

Admission control is typically a centralised function, e.g., in 3G cellular systems, it is provided within the Radio Network Controller (RNC).

In general, to admit a request of a new user or bearer, admission control typically estimates, via the use of proprietary algorithms, the system load (or its increase due to a new user request) and then decides the admittance of the user request by comparing the estimated system load (or its increase) with a predefined threshold above which service quality cannot be guaranteed.

Therefore, in order to be able to admit the maximum number of user requests without compromising the quality of the admitted calls, it is crucial to perform an estimation of the actual system load as correct and as precise as possible.

As described in 3GPP TS25.401 [1], the calculation of the actual system load typically takes into account interference and resource measurements available in the system.

In state of the art systems, admission control algorithms are independently applied to the uplink (UL) and to the downlink (DL) transmission directions.

In known methods for estimating the load, the cell and system loads are calculated with different approaches in the UL and DL directions. For example, in the UL direction, the load estimation may be done by measuring the Received Total Wideband Power (RTWP) and, in the DL direction, by measuring the Transmitted Carrier Power (TCP); where the TCP is the total cell transmitted power, as measured at the cell antenna connector, for common and dedicated channels.

Each request for resources in a given direction, UL or DL, is weighted in order to estimate the new (i.e. after the acceptance of the new request) UL or DL system load so that such computed system load can be compared with the resource budget or maximum load acceptable in the addressed cell.

In general, the weight of each request depends on the type of the desired service by a user, on the user equipment position and on the amount of interference affecting the user and the addressed cell.

One of the major difficulties in calculating the cell and system loads stands in giving the appropriate weights to the specific resource requests.

A cell load, hereinafter referred with symbol p, as defined in reference Holma, Tosakala [2], generally indicates the ratio of the received useful power (the power spent for the served calls in the cell) over the total received power (which includes both useful and interfering power) as following:

$$\rho \overset{\Delta}{=} \frac{ReceivedUsefulPower}{TotaleReceivedPower} \qquad (1)$$

The definition in (1) also applies if the power is substituted with any of the shared radio resources of the system. In order to calculate the cell load ρ with equation (1), a receiving point for the respective powers has to be defined.

A system load, hereinafter referred with symbol $S\_\rho$ , is defined as the load of a cell taking into consideration also the contribution of the interfering powers coming from neighbouring cells.

For the UL direction, in known methods for estimating the cell and system loads, the receiving point is generally straightforwardly defined as being the receive antenna connector of the cell. Such definition of the UL receiving point is widely used in state of the art cell and system load estimation methods, as for example in Holma, Tosakala [2].

Instead, for the DL direction, known methods for estimating the system load are very complex. In fact, the receiving point for the cell-transmitted signal is not unique, being the receive antenna connector of each connected user and, in general, being the connected users located in different geographical points respect to the serving cell.

Various known methods are provided for modeling the system load and for providing admission control algorithms in the DL direction (see for examples references Sanchez-Gonales et al. [3] and Perez-Romero et al. [4]).

In UMTS cellular telecommunication systems, admission control is typically performed in the Controlling-Radio Network Controller (C-RNC).

The C-RNC has the overall control of the radio resources of its related NodeBs. A NodeB is a functional node in a Radio Network Subsystem responsible for radio transmission and reception in one or more cells to and from the user equipments. In general, for each NodeB, there is only one C-RNC.

One of the tasks of the C-RNC is to operate, maintain and update, in both UL and DL directions, the status of the load of the controlled cells so as to correctly decide whether to admit or not a new incoming request.

In order to be able to transmit information to a generic i-th user in a desired way, connections over the radio interface have to obtain a predefined level of quality.
A measure of such quality level for the generic i-th user is the target Carrier to Interference Ratio ($CIR_{target,i}$) which indicates the desired ratio of received carrier wave power to received interfering power for the i-th user. Other measures for the quality of a connection include Signal to Interference Ratio (SIR), Signal to Noise Ratio (S/N), and Signal to Noise plus Interference Ratio (S/(I+N)).

The contribution of the i-th user to the DL system load may be defined as:

$$\rho_{DL,i} \overset{\Delta}{=} CIRt\arg et, i = \frac{C_i}{I_{TOT}} \qquad (2)$$

where $C_i$ is the power received from the assigned resources at the i-th user antenna connector and where $I_{TOT}$ is the total power received at the antenna connector of the i-th user. The received total power $I_{TOT}$ consists of the contributions given by the interference of intra-cell users (the total power received from the served calls at the serving cell), by the interference of inter-cell users (the total power received from the neighbour cells), and by the system noise. Thus, as defined in reference Holma, Toskala [2], $I_{TOT}$ can be expressed as follows:

$$I_{TOT} = (1-\alpha_i)I_{OWN} + I_{OTHER} + P_N = I_{OWN} \times \left(1 - \alpha_i + \frac{1}{G_i}\right) \qquad (3)$$

where $\alpha_i$ is an orthogonality factor taking into account the loss of orthogonality of transmitted codes due to the multipath effect, where $I_{OWN}$ is the intra-cell interference, where $I_{OTHER}$ is the inter-cell interference , *where $P_N$ is a received average white Gaussian noise and where $G_i$ is a geometry factor, defined as following:

$$G_i \overset{\Delta}{=} \frac{I_{OWN}}{I_{OTHER} + P_N} \qquad (4).$$

The DL system load $S\_{\rho DL}$ may be obtained by summing up each contribution to the load ($\rho_{DL,i}$) of each of the *N* users active in the system as following:

$$S\_\rho_{DL} = \sum_{i=1}^{N} \rho_{DL,i} \qquad\qquad (5)$$

A major drawback of the theoretical formalization of the DL system load provided in equation (5) is that, by combining equation (5) with equations (2) and (3), it appears that for each i-th served user, the factor $\left(1 - \alpha_i + \dfrac{1}{G_i}\right)$ needs to be calculated. Such factor depends on the position of the i-th user with respect to the cells, serving and neighbor, of the system.

Unfortunately, keeping track of the position of each served user introduces much complexity in real system computations.

In particular, in UMTS systems, since it is one of the roles of the C-RNC module to maintain the context of each active call and update it consequently via the respective dedicated and common measurements, the C-RNC module might result to be overloaded.

Radio measurements generally used are the TCP and the transmitted power per allocated code. TCP is a common measurement of the total cell transmitted power. Whereas the transmitted power per allocated code is a dedicated measurement of the transmitted power per active code or radio connection.

Radio measurements are performed by NodeB and forwarded to the C-RNC over the line interface connecting the RNC to the NodeB.

Since, in order to obtain reliable estimations, the NodeB should report dedicated measurements to the C-RNC at high frequency, an additional major drawback is that the message handling line and the C-RNC processor can get overloaded.

In summary, a major drawback of known methods for DL system load estimation is the need of calculating, updating and tracking several different load factors one for each of the connected users.

Considered that in a cell there might be hundreds of served users, such calculation becomes very costly in term of computational complexity.

## Summary of the Invention

It is therefore aim of the present invention to overcome the above mentioned drawbacks, in particular by providing a method for DL load estimation that avoids to keep track, user by user, of a factor which depends on the position of each user of the cell.

The before mentioned aim is achieved by a method for modeling the downlink system load defined by the steps of claim 1 and by a method for admission control defined by the steps of claim 3.

Embodiments of the present invention, having certain advantages, are given in the dependent claims.

The provided invention advantageously allows the DL system load to be easily updated.

Moreover, the provided invention reduces the computational complexity of the DL system load estimation.

The proposed method is robust with respect to the frequency to which the radio measurements are made available in real systems.

## Brief Description of the Drawings

The invention will now be described in preferred but not exclusive embodiments with reference to the accompanying drawings, wherein:

Figure 1     flow chart for modeling the DL system load according to an advantageous embodiment of the present invention;

Figure 2     flow chart for DL admission control according to another advantageous embodiment of the present invention.

## Deatailed description of a prefered embodiment

The proposed inventive method of modeling of the DL system load according the present invention includes the calculation of a virtual point "V" where all the users of a cell of a cellular telecommunication system are virtually moved.

In the DL direction, each generic i-th cell user has an actual target level of received signal quality $\rho_{DL,i}$, herein

after referred for simplicity as $\rho_i$. Such received signal quality may be the CIR, the SIR, the S/N, the S/(I+N) or any other measure of the signal quality that the user desires to obtain.

According to the invention, any generic i-th user located at an actual point of the cell may be virtually moved to any virtual point $V$ of the cell, without changing the power balance at the serving cell nor the quality of the offered service actually perceived by the served users, if a virtual target level $\rho_{i,V}$ of received signal quality of the generic i-th user is recalculated accordingly.

For each user, the virtual target level of received signal quality $\rho_{i,V}$ is recalculated as if each i-th user were located at point V with the constraints that the power budget of the serving cell as well as the actual quality level perceived by the specific i-th user as well as by all the generic i-th users remain unchanged.

According to the invention, the DL system load $S\_\rho_{DL}$ is modeled as if all the users of the cell were located in the virtual point $V$.

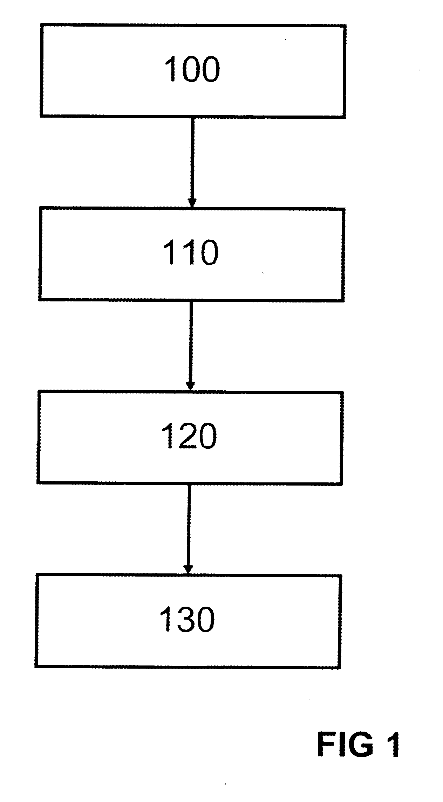

Figure 1 shows a flow chart of a method for estimating the DL system load according to an advantageous embodiment of the present invention in which a j-th user is accessing its serving cell.

At step 100, when the j-th user is accessing the cell, radio measurements may be performed by the j-th user itself.

For example, in UMTS systems, the incoming j-th user, may report, via a RACH message, an indication of the signal quality, the $C/I_j$ (Carrier over Interference power ratio), measured on the Primary Common Pilot CHannel (P-CPICH) of the accessed cell.

Upon receiving the measure of the $C/I_j$ by the j-th user and by knowing the P-CPICH transmitted power ($TP_{P-CPICH}$), the C-RNC may calculate a total interference $I_j$ measured by the user equipment at its actual access point as following:

$$I_j = TP_{P-CPICH} / C/I_j \qquad\qquad (eq.100)$$

In step 110, it is calculated the virtual point V to which all the cell users, the already admitted ones and the j-th accessing user, are virtually moved. In further embodiment of the present invention, such virtual point V may be an already predefined point and therefore the calculation of the virtual point V, in step 110, may correspond to a mere selection of the already predefined virtual point.

In a further embodiment of the present invention, the virtual point V corresponds to the barycentre of all the served user positions and of the actual access point of the j-th user.

In particular, if the j-th accessing user is the first user to be admitted in the cell, the virtual access point V may correspond to the actual accessing position of the j-th user. Thus, if the j-th accessing user is the first user to be admitted in the cell, the virtual interference level $I_{v,new}$ experienced by the j-th user as if it were virtually located at the virtual point V, may also correspond to the interference level $I_j$ actually experienced by the j-th user at its actual accessing point.

Moreover, also a newly calculated cell load $\rho_{DL,new}$ may correspond to the desired received signal quality $CIR_{target}$ (or $\rho_j$) as requested by the accessing j-th user.

When the accessing j-th user is not the first user in the cell, the calculation of the virtual point V may take into account the already admitted users and the incoming j-th accessing user.

Advantageously, both the interference measurement reported by the j-th incoming user and the interference measurements reported by the already admitted users may be used for the calculation of the virtual point V as the barycentre of the system.

In step 110, a new virtual interference level $I_{V,new}$ received at the new virtual access point V may be calculated. The new virtual interference level $I_{V,new}$ may be obtained as the average of the interference levels experienced by all (admitted and the one to be admitted) cell users weighted by the respective user's contribution to the cell load.

In a further embodiment of the present invention, the new virtual interference level $I_{v,new}$ may be calculated as a function of a previously calculated virtual interference level $I_{V,0}$ as follows:

$$I_{V,new} = \frac{\rho_{DL,0} \cdot I_{V,0} + \rho_j \cdot I_j}{\rho_{DL,0} + \rho_j} \qquad\qquad (eq.110)$$

where $\rho_{DL,0}$ is the previous, i.e. before the admittance of the new user, DL cell load.

In step 120, it is calculated, for the j-th accessing user, the virtual target level of received signal quality $\rho_{j,V}$ as if all said users were virtually located at said virtual point V so that the power budget of the cell and each of the actual target level of received signal quality are unchanged. With the above constraint, it is also ensured that the power to be transmitted by the serving cell $Cj$ to the j-th user stays unchanged.

The virtual target level of received signal quality $\rho_{j,V}$ may be calculated as following:

$$\rho_{j,V} = \frac{\rho_j \cdot I_j}{I_{V,new}} \qquad \qquad (eq.120)$$

In step 130, the DL system load $S\_\rho_{DL}$ may be calculated as following:

$$S\_\rho_{DL,new} = DL\_A_{new} * \rho_{DL,new} \qquad \qquad (eq.130)$$

where $DL\_A_{new}$ is the new downlink scaling factor, i.e. the normalisation factor that conducts the DL intra-cell load $\rho DL, new$ to the system load $S\_\rho_{DL,new}$.

$DL\_A_{new}$ may be calculated as following:

$$DL\_A_{new} = \frac{I_{V,new}}{P_{COMM} + I_{V,new} \cdot \rho_{DL,new}} \qquad \qquad (eq.131)$$

where $P_{COMM}$ is the cell transmitted power for the common channels (a pre-configured parameter in a base station of a cell) and where $\rho_{DL,new}$ is a newly calculated DL cell load, obtained, considering that the accessing j-th user were to be admitted, as following:

$$\rho_{DL,new} = \frac{\rho_{DL,0} \cdot I_{V,0}}{I_{V,new}} + \rho_{j,V} \qquad \qquad (eq.132)$$

In equation (eq. 132), the sum of the previous virtual target levels of received signal quality for the already admitted users, $\rho_{DL,0}$, is updated, with the newly calculated virtual point, through the factor $\dfrac{I_{V,0}}{I_{V,new}}$ .

Equation (Eq.131) actually defines the total power (serving cell + neighbour cells) over the power from the serving cell, as received by the users of that serving cell at the common virtual access point.

Advantageously, in an embodiment of the proposed inventive virtualisation procedure according the present invention, it results that the new cell load $\rho_{DL,new}$ is given by the sum of each single user contribution to the cell load. In fact, by combining equations (eq.120), (eq.131) and (eq.132) it comes out that $\rho_{DL,new} = \sum\limits_{j=1}^{j=M} \rho_j$

where M is the number of users admitted in the cell.

In a further embodiment of the present invention, the new DL scaling factor may be derived as a new average DL scaling factor $DL\_\tilde{A}_{new}$ of at least one previous scaling factor and a new scaling factor.

The new average DL scaling factor $DL\_\tilde{A}_{new}$ may be calculated as following:

$$DL\_\tilde{A}_{new} = W_a * DL\_A_0 + (1-W_a)*DL\_A_{new} \qquad \qquad (eq.131a)$$

where is $W_a$ an averaging coefficient whose value is comprised between zero and one and where $DL\_A_0$ is the previous

DL scaling factor.

In accordance, the new system load $S\_\rho_{DL,\ new}$ may be calculated as following:

$$S\_\rho_{DL,new} = DL\_\tilde{A}_{new} * \rho_{DL,V,,new} \qquad (eq.130a)$$

Each time a new accessing j-th user is accessing the cell, the values of $I_{V,new}$, $\rho_{DL,new}$ and $DL\_A_{new}$ (or $DL\_\tilde{A}_{new}$) are newly calculated and the corresponding values derived from the previous admission become respectively $I_{V,0}$, $\rho_{DL,0}$ and $DL\_A_0$ (or $DL\_\tilde{A}_0$).

At start-up, the value of the previous downlink cell load $\rho_{DL,0}$ and the value of the previous virtual interference level $I_{V,0}$ may be set to initial value of zero so that, for the first accessing j-th user, $I_{V,new} = I_j$ and $\rho_{DL,new} = \rho_{j,V} = \rho_j$ (see equations (eq.110), (eq.120) and (eq.132)).

In a further embodiment of the present invention, as described in references Holma, Tokala [2] and Laiho et al. [5], $I_j$ may be defined as following:

$$Ij = TCP + L_j \cdot \sum \frac{TCP_{NC,k}}{L_k} + N_0 \cdot L_j \qquad (eq.101)$$

where $TCP$ is the Transmitted Carrier Power of the accessed cell, where $TCP_{NC,k}$ is the TCP transmitted by the k-th Neighbour Cell and where $Lj$ defines the inverse of the attenuation (or pathloss) between the j-th user and the accessed cell, and where $L_k$ defines the inverse of the attenuation (or pathloss) between the j-th user and the k-th Neighbour Cell.

Assuming that "a regime" all cells are offering the same traffic load, equation (eq.101) can be further simplified as follows:

$$Ij = TCP \cdot \left(1 + L_j \cdot \sum \frac{1}{L_k}\right) + N_0 \cdot L_j = DL\_a_j \cdot TCP \qquad (eq.102)$$

where $DL\_a_j$ represents the downlink scaling factor when the position of j-th user is also the reference receiving point for the load estimation.

Advantageously, the DL estimation according to the proposed method may be updated with radio measurements available in a real system and deployed product

The calculation of the virtual point V may be adjusted with periodical common measurements performed by the cell.

Conveniently, such common measurements should be not required very frequently.

In further embodiments of the present invention, the new DL system load $S\_\rho_{DL,new}$ may be estimated at each deletion event in which a quitting user is leaving the cell (e.g. for call release or outward handover/mobility) or at each handover event in which an inward mobile user is accessing from a neighbouring cell.

In case of a deletion event, the new estimated system load is calculated by removing the contribution of the departing user.

In both events (deletion and handover), the user (departing or accessing) is assumed to be located at the previously calculated virtual point.

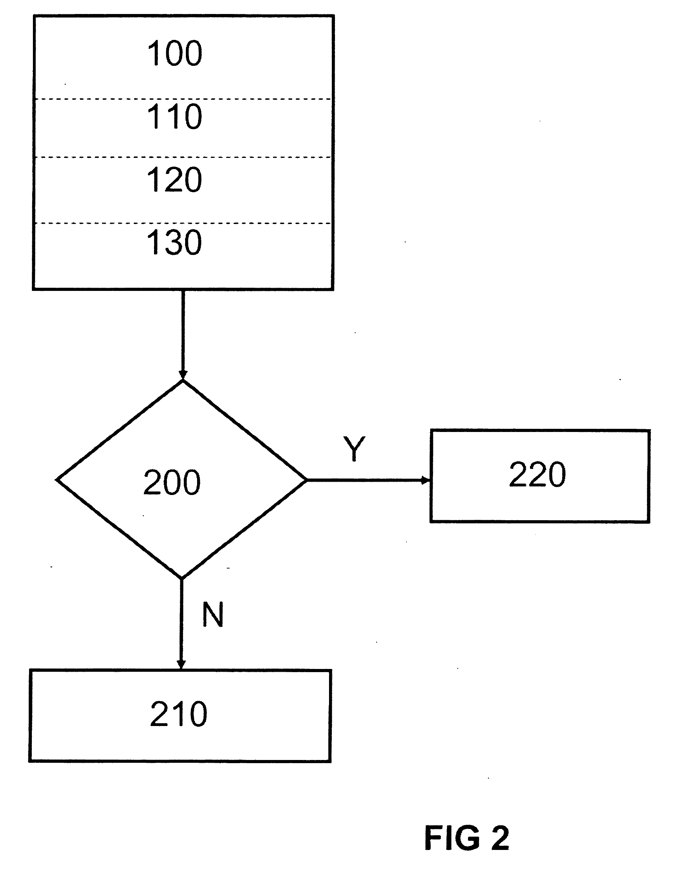

Figure 2 shows a flow chart for DL admission control according to a further advantageous embodiment of the present invention.

In step 100, a j-th user is accessing the cell. The new DL system load $S\_\rho_{DL,new}$ may be estimated via steps 100 to 130 as above described.

In step 200, the estimated system load $S\_\rho_{DL,new}$ is compared to a predefined threshold above which quality of service cannot be guaranteed.

If the estimated system load $S\_\rho_{DL,new}$ is below the threshold, the request of service of accessing j-th user is accepted and the j-th user is admitted within the cell.

If the estimated system load $S\_\rho_{DL,new}$ is above the threshold, the request of service of accessing j-th user may be rejected.

In a further embodiment of the present invention, the variation of the estimated system load $S\_\rho_{DL,new}$ due to the access of the accessing j-th user may be used in the above comparison.

**List of used acronyms and symbols**

| | | |
|---|---|---|
| $CIR_{target,i}$ | target carrier interference ratio for the i-th user |
| $C/I_j$ | measured carrier over interference power ratio by the j-th user |
| $C_i$ | carrier power received by the i-th user |
| C-RNC | controlling RNC |
| DL | downlink |
| $G_i$ | geometry factor |
| $I_j$ | interference level of the j-th user |
| $I_v$ | virtual interference level at the virtual point V |
| $I_{v,new}$ | newly calculated interference level at the virtual point V |
| $I_{V,0}$ | previously calculated interference level at the virtual point V |
| $I_{OWN}$ | intra-cell interference |
| $I_{OTHER}$ | inter-cell interference |
| $I_{TOT}$ | total power received by the i-th user |
| $P_{COMM}$ | base-station transmitted power for downlink common channels |
| $P_N$ | received average white Gaussian noise |
| P-CPICH | primary common pilot channel |
| RAN | radio access network |
| RACH | random access channel |
| RNC | radio network controller |
| RRM | radio resource management |
| RTWP | received total wide band power |
| $S\_\rho$ | system load |
| $S\_\rho_{DL}$ | DL system load |
| TCP | transmitted carrier power |
| $TP_{P-CPICH}$ | transmitted power in the P-CPICH |
| UL | uplink |
| UMTS | universal mobile telecommunications system |
| WCDMA | wide band code division multiple access |
| $\alpha_;$ | orthogonality factor |
| $\rho$ | cell load |
| $\rho_{DL,i}$ | contribution of the i-th user to the DL system load; or target level of received signal quality for the i-th user |
| $\rho_i$ | contribution of the i-th user to the system load |

**List of cited references**

[1] 3GPP TS25.401 "3rd Generation Partnership Project; Technical Specification Group Radio Access Network; UTRAN Overall Description"

[2] H.Holma, A. Toskala "WCDMA for UMTS", III edition

[3] J.Sanchez-Gonzalez, J. Perez-Romero, O. Sallent, R. Augusti, "An Admission Control Algorithm for WCDMA Considering Mobile Speed and Service Characteristic"

[4] J. Perez-Romero, O. Sallent, R. Augusti, G. Pares, "A Downlink Admission Control Algorithm for UTRA-FDD"

[5] J. Laiho, A. Wacker, T. Novosad, "Radio Network Planning and optimisation for UMTS"

**Claims**

1. A method for modeling the downlink system load in a cellular telecommunication system, wherein a cell comprises a number of users, each of said users having an actual target level of received signal quality; said method **characterized in that** it comprises the steps of:

(a) selecting a virtual point in which all said users are virtually moved;

(b) calculating, for each of said users, a virtual target level of received signal quality as if all said users were virtually located at said virtual point so that the power budget of said cell and each of said actual target levels of received signal quality are unchanged; and

(c) modeling the downlink system load as if all said users were virtually located at said virtual point.

2. The method according to claim 1,
wherein said users comprise admitted users and a j-th user, said j-th user accessing said cell in an actual point at an access event (100);
wherein said step (a) is performed at said access event of said accessing j-th user (110);
wherein, in said step (b), for said j-th accessing user, said new virtual target level is calculated and, for said admitted users, the sum of the previous virtual target levels is updated with said selected virtual point (120); and
wherein said step (c) is performed at said access event of said accessing j-th user (130).

3. A method for admission control in the downlink direction in a cellular telecommunication system, wherein a cell comprises a number of users, said users comprising admitted users and an accessing j-th user, which is accessing said cell in an actual point at an access event (100), each of said users having an actual target level of received signal quality; said method **characterized in that** it comprises the steps of:

(a) selecting (110), at each access event of said accessing j-th user, a virtual point in which all said users are virtually moved;
(b) calculating, for said accessing j-th user a virtual target level of received signal quality and, for said admitted users, updating the sum of the previous virtual target levels of received signal quality with said selected virtual point as if all said users were virtually located at said virtual point so that the power budget of said cell and each of said actual target levels of received signal quality are unchanged (120);
(c) modeling (130), at each access event of said accessing j-th user, the downlink system load as if all said users were virtually located at said virtual point; and
(d) if said modeled downlink system load is below a predefined load threshold (200), admitting said accessing j-th user (210).

4. The method according to claim 3, further comprising the step of:

(e) if said modeled downlink system load is above said predefined load threshold (200), not-admitting said accessingj-th user (220).

5. The method according any of the preceding claims,
wherein said step (a) further comprises:

- calculating said virtual point as the barycenter of all said users within said cell.

6. The method according to any of the claims 2 to 4,
wherein said step (a) further comprises:

- calculating said virtual point as the barycenter of all said users within said cell, and
- calculating the new virtual interference level $I_{V,new}$ received by said users as if said users were virtually located at said virtual point, essentially as

$$I_{V,new} = \frac{\rho_{DL,0} \cdot I_{V,0} + \rho_j \cdot I_j}{\rho_{DL,0} + \rho_j}$$

where $\rho_{DL,0}$ is the previous downlink cell load, where $I_{v,0}$ is the previous virtual interference level, and where $Ij$ is the actual interference level received by said accessing j-th user at said actual point.

7. The method according to any of the claims 2 to 6,
wherein said step (b) further comprises:

- calculating said virtual target level of received signal quality, herein after referred as $\rho_{j,V}$, essentially, as

$$\rho_{j,V} = \frac{\rho_j \cdot I_j}{I_{V,new}}$$

where $\rho_j$ is said actual target level of received signal quality for said accessing j-th user, where $I_{v,new}$ is the new virtual interference level received by said users as if said userswere virtually located at said virtual point, and where *Ij* is the actual interference level received by said j-th user at said actual point; and

- updating said sum of the virtual target levels with said selected virtual point, essentially, by multiplying the previous downlink cell load $\rho_{DL,0}$ with the factor $\dfrac{I_{V,0}}{I_{V,new}}$

where $I_{v,0}$ is the previous virtual interference level.

8.  The method according to any of the claims 2 to 7
    wherein said step (c) further comprises:

    - modeling said downlink system load, herein-after referred as $S\_\rho_{DL}$, essentially, as

$$S\_\rho_{DL} = DL\_A_{new} * \rho_{DL,V,,new}$$

where $DL\_A_{new}$ is a new downlink scaling factor essentially calculated as

$$DL\_A_{new} = \frac{I_{V,new}}{P_{COMM} + I_{V,new} \cdot \rho_{DL,new}}$$

where $I_{v,new}$ is the new virtual interference level received by said users as if they were located at said virtual point, where $P_{COMM}$ is is the pre-configured cell transmission power for the common channels, and where $\rho_{DL,new}$ is the new downlink cell load, if said j -th user were to be admitted, essentially calculated as

$$\rho_{DL,new} = \frac{\rho_{DL,0} \cdot I_{V,0}}{I_{V,new}} + \rho_{j,V}$$

where $\rho_{DL,0}$ is the previous downlink cell load.

9.  The method according to any of the claims between 2 and 7, wherein said step (c) further comprises:

    - modeling said downlink system load, herein-after referred as $S\_\rho_{DL}$, essentially, as

$$S\_\rho_{DL} = DL\_\tilde{A}_{new} * \rho_{DL,V,,new}$$

where $DL\_\tilde{A}_{new}$ is a new average downlink scaling factor essentially calculated as a weighted average of at least one previous scaling factor and a new scaling factor $DL\_A_{new}$ essentially calculated as

$$DL\_A_{new} = \frac{I_{V,new}}{P_{COMM} + I_{V,new} \cdot \rho_{DL,new}}$$

where $I_{V,new}$ is the new virtual interference level received by said users if they were located at said virtual point, where $P_{COMM}$ is a pre-configured cell transmission power for the common channels , and where $\rho_{DL,new}$ is a new downlink cell load, if said j-th user were to be admitted, essentially derived as

$$\rho_{DL,new} = \frac{\rho_{DL,0} \cdot I_{V,0}}{I_{V,new}} + \rho_{j,V}$$

where $\rho_{DL,0}$ is the previous downlink cell load.

**10.** The method according to any of the claims 6 to 9 further comprising the step of:

- at start-up, initializing said previous downlink cell load $\rho_{DCL,0}$ and said previous virtual interference level $I_{v,0}$ to the initial value of zero so that, for the first accessing j-th user, said virtual point is said actual point and so that $I_{V,new} = I_j$, where $I_j$ is the actual interference level received by said j-th user at said actual point.

**11.** The method according to any of the claims 2 to 10, further comprising the step:

- calculating the actual interference level received by said j-th user at said actual point, referred as $I_j$, from radio measurements performed by said j-th user.

**12.** The method according to claim 1, further comprising the step of:

- calibrating said virtual point with periodical common measurements performed by said cell.

**13.** The method according to claim 1,
wherein said steps (a) and (b) are performed at a deletion event, in which a departing user is quitting said cell, assuming that said departing user is positioned at the previous virtual point; and
wherein step (c) is performed by removing from the previous system load the contribution of said departing user, assuming that said departing user is positioned at the previously selected virtual point.

**14.** The method according to claim 1,
wherein said steps (a), (b) and (c) are performed at the accessing event of a new user for inward mobility from a neighbour cell, assuming that said accessing user is accessing at the previously selected virtual point.

**FIG 1**

**FIG 2**

**European Patent Office**

**EUROPEAN SEARCH REPORT**

Application Number

EP 05 42 5916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/196758 A1 (SHOJI TAKAHIRO ET AL) 26 December 2002 (2002-12-26) * paragraph [0041] * * paragraph [0065] - paragraph [0069] * | 1-14 | INV. H04Q7/38 |
| X | EP 1 521 489 A (SIEMENS MOBILE COMMUNICATIONS S.P.A) 6 April 2005 (2005-04-06) * claim 1 * | 1-14 | |
| A | EP 1 189 467 A (SCOREBOARD, INC) 20 March 2002 (2002-03-20) * paragraph [0019] * | 1-14 | |
| A | US 5 507 008 A (KANAI ET AL) 9 April 1996 (1996-04-09) * column 6, line 18 - line 64 * | 1-14 | |
| A | US 2004/136342 A1 (PEDERSEN KLAUS INGEMANN [DK] ET AL) 15 July 2004 (2004-07-15) * the whole document * | 1-14 | |
| | | | **TECHNICAL FIELDS SEARCHED (IPC)** |
| | | | H04Q |

The present search report has been drawn up for all claims

| Place of search | Date of completion of the search | Examiner |
|---|---|---|
| Berlin | 11 May 2006 | Bernedo Azpiri, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5916

This annex lists the patent family members relating to the patent documents cited in  the above-mentioned European search report.
The members are as contained in the European Patent Office EDP file on
The European Patent Office is in no way  liable for these particulars which are merely  given for the purpose of information.

11-05-2006

| Patent document cited in search report | | Publication date | Patent family member(s) | | Publication date |
|---|---|---|---|---|---|
| US 2002196758 | A1 | 26-12-2002 | NONE | | |
| EP 1521489 | A | 06-04-2005 | NONE | | |
| EP 1189467 | A | 20-03-2002 | CA JP | 2325204 A1 2002111568 A | 02-05-2002 12-04-2002 |
| US 5507008 | A | 09-04-1996 | NONE | | |
| US 2004136342 | A1 | 15-07-2004 | CN WO EP | 1528099 A 02091779 A1 1388271 A1 | 08-09-2004 14-11-2002 11-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; UTRAN Overall Description. *3GPP TS25.401*
- **H.HOLMA ; A. TOSKALA.** WCDMA for UMTS
- **J.SANCHEZ-GONZALEZ ; J. PEREZ-ROMERO ; O. SALLENT ; R. AUGUSTI.** *An Admission Control Algorithm for WCDMA Considering Mobile Speed and Service Characteristic*

- **J. PEREZ-ROMERO ; O. SALLENT ; R. AUGUSTI ; G. PARES.** *A Downlink Admission Control Algorithm for UTRA-FDD*
- **J. LAIHO ; A. WACKER ; T. NOVOSAD.** *Radio Network Planning and optimisation for UMTS*